# EUROPÄISCHE PATENTSCHRIFT

(11) **EP 3 055 111 B1**
(45) Veröffentlichungstag und Bekanntmachung des Hinweises auf die Patenterteilung: **27.12.2017**
(21) Anmeldenummer: 14784047.4
(22) Anmeldetag: 10.10.2014
(51) Int. Cl.: B26D 1/60, B26D 3/16, B23D 21/04, B26D 1/18, B29C 47/00, B26D 5/04, B26D 5/08

(54) **ABLÄNGVORRICHTUNG FÜR EXTRUDIERTE KUNSTSTOFFPROFILE**
DEVICE FOR CUTTING EXTRUDED PLASTIC PROFILES
DISPOSITIF POUR LA COUPE DE PROFILES DE PLASTIQUE EXTRUDÉ

(30) Priorität: 12.10.2013 DE 102013220621
(43) Veröffentlichungstag der Anmeldung: 17.08.2016
(73) Patentinhaber: battenfeld-cincinnati Germany GmbH, 32547 Bad Oeynhausen (DE)
(72) Erfinder: DRÖGE, Jörg, 47647 Kerken (DE); VON HIPPEL, Christian, 47906 Kempen (DE)
(86) Internationale Anmeldenummer: PCT/EP2014/071821
(87) Internationale Veröffentlichungsnummer: WO 2015/052340

(56) Entgegenhaltungen:
- DE-U1- 20 104 200
- US-A- 4 235 137
- US-A- 4 807 502

## Beschreibung

Die Erfindung betrifft eine Vorrichtung zum Ablängen eines vorzugsweise dickwandigen extrudierten Rohres, mit mindestens einem Trennwerkzeug und einer Aufnahmeeinheit für das Trennwerkzeug, wobei das Trennwerkzeug radial zur Extrusionsachse verfahrbar ist und über weitere Mittel um das abzulängende Rohr herum rotierbar ist, um das Rohr abzulängen.

Zum Ablängen von extrudierten Rohren werden meist sogenannte fliegende Sägen eingesetzt, wobei ein kreisrundes Sägeblatt entweder von unten (Unterflursäge), von oben (Tauchsäge) oder von der Seite (Quersäge) an das zu sägende Rohr herangeführt wird, in den Querschnitt des Rohres eintaucht und im ersten Schritt die Wandstärke durchtrennt. Im zweiten Schritt wird das Sägeblatt um das Rohr herumgeführt, um das Rohr vollständig abzulängen. Hierbei wird das abzulängende Rohr während des Sägevorgangs eingespannt; der Sägeschlitten oder Sägewagen fährt dann synchron zum kontinuierlich weiterlaufenden Extrusionsvorgang mit der Extrusionsgeschwindigkeit mit ("fliegende Säge").

Werden Rohre gesägt, entstehen Sägespäne. Außerdem wird, bedingt durch die Reibung des Sägeblattes am Rohr, insbesondere bei einem Kunststoff-Rohr, eine statische Aufladung erzeugt. Dies hat den Nachteil, daß die Sägespäne am Rohr haften bleiben, was eine Verschmutzung zur Folge hat. Der entstehende Abfall muss oft als Sondermüll deklariert werden, was eine Wiederverwertung unmöglich macht.

Für kleine Rohre wird bereits eine Vorrichtung eingesetzt, bei der ein Ablängen spanlos erfolgt. Anstatt einer laufenden Säge wird ein rundes Messer so lange um das Rohr herumgeführt, bis die Rohrwandung durchtrennt ist.

Mit der letztgenannten, spanlosen Trennung wird es erreicht, kleine Rohrdurchmesser mit dünnem Querschnitt sauber zu trennen, jedoch war es bislang nicht möglich, erfolgreich auch dickwandige Rohre mit großem bis sehr großem Durchmesser - etwa 2m Durchmesser - abzulängen. Bei diesen Rohren wurde immer wieder auf das weiter oben beschriebene Sägen zurückgegriffen, was die bekannten Nachteile aufweist.

Versuche haben gezeigt, dass das Hauptproblem darin liegt, die Messer exakt durch das dickwandige Rohr zu führen. Durch die große Dicke und den großen Durchmesser wird bereits bei geringster Schrägstellung des Messers dieses im Material verkanntet, was ein Zerbrechen des Messers zur Folge hat.

Die Marktanforderung für derartige Trenneinheiten liegt in einer hohen Liniengeschwindigkeit bei kurzen Schnittlängen und der Möglichkeit, beispielsweise bei Kanalrohren aus PP/PVC eine Fase anzubringen. Es sind zwar Trennautomaten bekannt, die den Trennvorgang sehr schnell ausführen können, diese haben aber meist den Nachteil, dass diese dann nicht Fasen können oder nicht für jedes Kunststoffmaterial geeignet sind. Trennautomaten, mittels denen ein Fasen möglich ist, haben aber meist einen verhältnismäßig großen Sägewagen und sind daher langsam. Die somit benötigte Zeit für einen Schnitt ist sehr lang.

Bei den heutigen Maschinen wie Sägen (fliegende Säge) werden Rohre verschiedenster Durchmesser über einen um das Rohr laufenden Trennmesserarm bzw. Sägearm durchgetrennt. Alle hierzu benötigten Funktionen wie Arm vor-/zurückfahren, Rohr klemmen/lösen und die entsprechenden Stellungsrückmeldungen sind auf der um das Rohr rotierenden Scheibe angebracht. Hierzu werden für die elektrischen Signale Schleifringe benutzt. Die übliche Verfahrensweise ist, dass für jedes Signal eine eigene Schleifringspur zu benutzt wird. Durch die Baugröße bei kleineren Maschinen sowie die Kosten pro Schleifring werden die Signale und damit die zur Verfügung stehenden Funktionen beschränkt.

Eine Lösung der oben beschriebenen Probleme ist in der DE 20 104 200 beschrieben, bietet aber noch nicht zufriedenstellende Ergebnisse. Hierbei wird eine Axialbewegung über eine als Lagerhülse ausgeführte verwirklicht deren Genauigkeit nur erreicht wird indem eine präzise Fertigung mit glatten und gehärteten Oberflächen sichergestellt wird.

Der Erfindung liegt daher die **Aufgabe** zugrunde, das bekannte Fachwissen einer gattungsgemäßen Trennvorrichtung, die mit einem Messer ausgestattet ist, derart weiterzuentwickeln, dass es möglich wird, eine Vorrichtung anzubieten die einfacher baut und dadurch kostengünstiger in der Herstellung wird.

Die **Lösung** der Aufgabe ist im Anspruch 1 definiert. Derartige Linearführungselement erübrigen eine gehärtete und glatte Oberfläche des Ringelementes, es genügt die exakte Positionierung der Linearführungen am Umfang des Ringelementes.

Weiterbildungsgemäß wird über die Linearführungselemente das Ringelement axial geführt. Hierbei ist vorgesehen, dass die Linearführungselemente handelsübliche Linearführungsprofile sind.

In den Zeichnungen wird schematisch eine erfindungsgemäße Vorrichtung gezeigt:
- Fig. 1: zeigt eine typische Extrusionslinie
- Fig. 2: den Teil der Trennvorrichtung

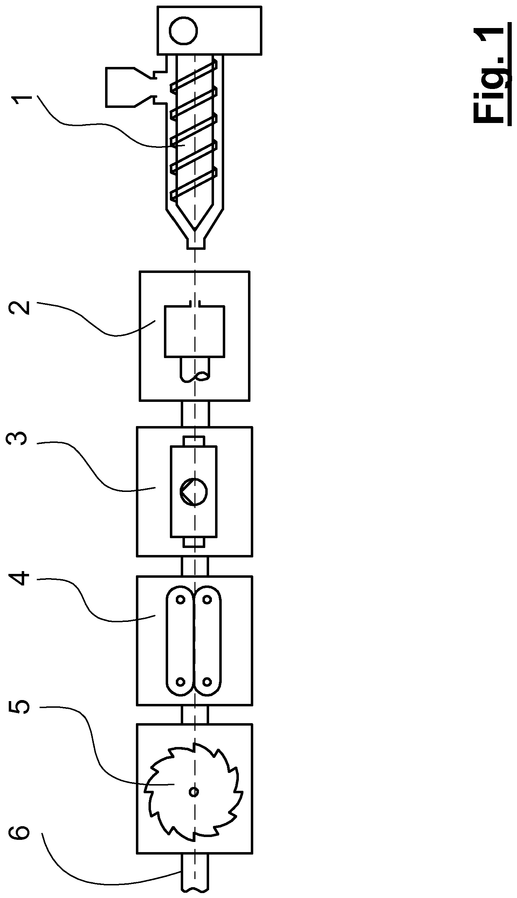

Figur 1 zeigt eine typische Extrusionslinie, wie sie heute für die Profilextrusion, egal, ob für die Produktion von Fensterprofilen oder Rohren, zum Einsatz kommt. Sie zeigt einen Extruder 1, in dem Kunststoff aufgeschmolzen wird, und kontinuierlich zur Formgebung ins Extrusionswerkzeug 2 gefördert wird. Daran schließt sich eine Kalibrier- und Kühlstation 3 an, je nach Profil können weitere Kühlstationen eingesetzt werden. Nach den Kühlstationen schließt sich eine Abzugsvorrichtung 4 an. Um die Endlosprofile 6 auf die gewünschte Länge abzuschneiden ist anschließend eine Trennvorrichtung 5 angeordnet.

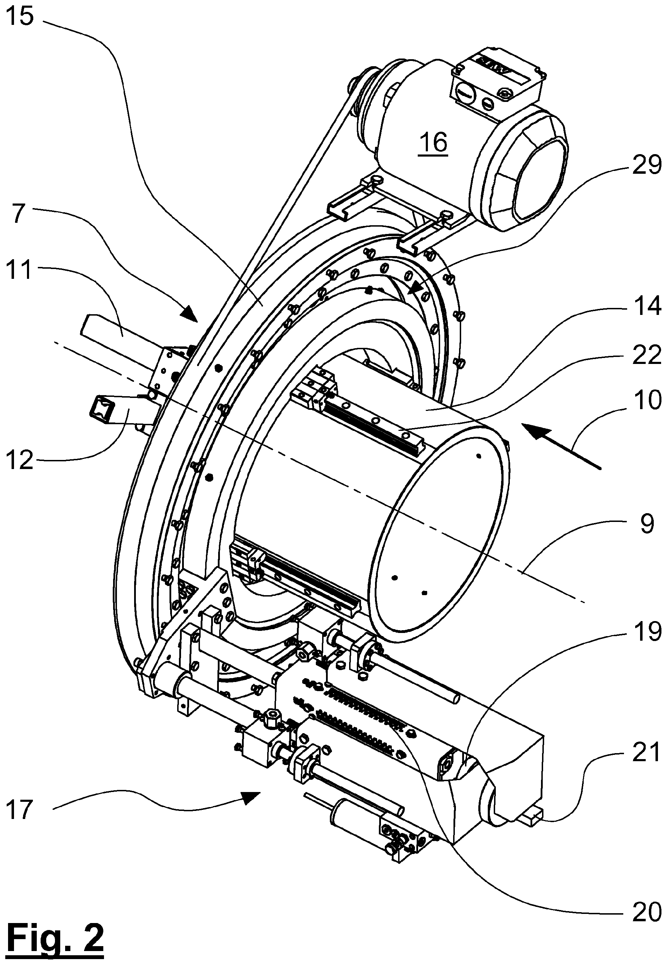

Figur 2 zeigt eine schematische Darstellung der erfindungsgemäßen Trennvorrichtung und entspricht der Position 5 gemäß der Darstellung in Figur 1. Um die Extrusionsachse 9 ist eine Hülse 14 mit Linearführungen 22 angeordnet, welches mit einem Ringelement 29 in Wirkverbindung steht. An der Aufnahmescheibe 15 sind Trennwerkzeuge 7 angeordnet die über Zahnstangen 11 und 12 verstellt werden.

Das Ringelement 29 wird so entlang der Extrusionsache 9 über die auf der Hülse 14 montierten Linearführungselemente 22 axial bewegt.

Das Ringelement 29 kann entlang der Extrusionsachse 9 in oder entgegen der Extrusionsrichtung 10 verschoben werden. Zum Verschieben des Ringelements 29 ist eine Axialantrieb 17 vorgesehen der ebenfalls mit dem Ringelement 29 in Wirkverbindung steht. Als Antrieb dient ein Pneumatikzylinder 19 dessen Richtungsumschaltung mittels Endschalter 21 realisiert wird. Für die Lagebestimmung der Endschalter 21 bei einer manuellen Verstellung dient eine Skala 20.

Weiterhin ist der Rotationsantrieb 16 für die Aufnahmescheibe 15 dargestellt.

### Bezugszeichenliste:

- 1: Extruder
- 2: Extrusionswerkzeug
- 3: Kalibrier- und Kühltank
- 4: Abzugsvorrichtung
- 5: Trennvorrichtung
- 6: Profil
- 7: Trennwerkzeug

- 9: Extrusionsachse
- 10: Extrusionsrichtung
- 11: erste Zahnstange (parallel)
- 12: zweite Zahnstange (radial)

- 14: Hülse
- 15: Aufnahmescheibe
- 16: Rotationsantrieb für 15
- 17: Axialantrieb für 29

- 19: Pneumatikzylinder
- 20: Skala
- 21: Endschalter
- 22: Linearführung

- 29: Ringelement

## Patentansprüche

1. Vorrichtung zum Ablängen eines vorzugsweise dickwandigen extrudierten Rohres (6),
mit mindestens einem Trennwerkzeug (7) und
einer Aufnahmeeinheit für das Trennwerkzeug (7) wobei das Trennwerkzeug (7) radial zur Extrusionsachse (9) verfahrbar ist
und über weitere Mittel um das abzulängende Rohr (6) herum rotierbar ist, um das Rohr abzulängen,
**dadurch gekennzeichnet, dass**
die Aufnahmeeinheit mit einer Aufnahmescheibe (15) für das Trennwerkzeug (7) über ein einem Ringelement (29) mit einer Hülse (14) in Verbindung steht, wobei an der Hülse (14) Linearführungselemente (22) parallel zur Extrusionsachse (9) angeordnet sind, wobei die Linearfühungelemente (22) mit dem Ringelement (29) in Wirkverbindung stehen und wobei mindestens vier Linearführungselemente (22) gleichmäßig am Umfang der Hülse (14) verteilt sind.

2. Vorrichtung nach Anspruch 1, **dadurch gekennzeichnet, dass** über die Linearführungselemente (22) das Ringelement (29) axial führbar ist.

3. Vorrichtung nach Anspruch 2, **dadurch gekennzeichnet, dass** die Linearführungselemente (22) handelsübliche Linearführungsprofile sind.

## Claims

1. Apparatus for cutting a preferably thick-walled extruded pipe (6),
comprising at least one separating tool (7) and
a receiving unit (8) for the separating tool (7),
the separating tool (7) being movable radially to the extrusion axis (9) and rotatable around the pipe to be cut (6) via further means
in order to cut the pipe (6)
**characterized in that**
the receiving unit comprising a receiving disk (15) for the separating device (7) is connected to a sleeve (14) through a ring element (29),
linear guidance elements (22) being arranged parallelly to the axis of extrusion (9) at the sleeve,
the linear guidance elements (22) being in operative connection with the ring element (29), and
at least four linear guidance elements (22) being equally distributed around the perimeter of the sleeve (14).

2. Apparatus according to claim 1, **characterized in that** the ring element (29) is axially drivable via the linear guidance elements (22).

3. Apparatus according to claim 2, **characterized in that** the linear guidance elements (22) are customary linear guidance profiles.

## Revendications

1. Appareil pour le découpage d'un tube extrudé (6), de préférence aux parois épaisses,
comprenant au moins un outil de séparation (7) et
une unité réceptrice pour l'outil de séparation (7),
l'outil de séparation (7) pouvant être déplacé radialement par rapport à l'axe d'extrusion (9) et
tourné autour du tube à extruder (6) par d'autres moyens afin d'extruder le tube,
**caractérisé en ce que**
l'unité réceptrice comprenant une disque de prise (15) pour l'outil de séparation (7) communique avec une douille (14) via un élément annulaire (29),
des éléments de guidage linéaire (22) étant arrangés de façon parallèle par rapport à l'axe d'extrusion (9),
les éléments de guidage linéaire (22) étant en communication avec l'élément annulaire (29) et
au moins quatre éléments de guidage linéaire (22) étant reparties sur la circonférence de la douille (14) de manière régulière.

2. Appareil selon la revendication 1, **caractérisé en ce que** l'élément annulaire peut être guidé axialement via les éléments de guidage linéaire (22).

3. Appareil selon la revendication 2, **caractérisé en ce que** les éléments de guidage linéaire (22) sont des profils de guidage linéaire usuels.
